# FASCICULE DE BREVET EUROPEEN

(11) **EP 4 412 810 B1**
(45) Date de publication et mention de la délivrance du brevet: **17.09.2025**
(21) Numéro de dépôt: 22789970.5
(22) Date de dépôt: 27.09.2022
(51) Int. Cl.: B29C 33/12, B29C 70/78, B29C 70/86, B29C 70/48, B29D 99/00, B29C 33/14, B29C 70/54, B29L 31/08

(54) **PROCEDE DE FABRICATION D'UNE AUBE POUR UNE TURBOMACHINE D'AERONEF**
VERFAHREN ZUR HERSTELLUNG EINER SCHAUFEL FÜR EIN FLUGZEUGTURBINENTRIEBWERK
METHOD FOR PRODUCING A BLADE FOR AN AIRCRAFT TURBINE ENGINE

(30) Priorité: 05.10.2021 FR 2110523
(43) Date de publication de la demande: 14.08.2024
(73) Titulaire: SAFRAN AIRCRAFT ENGINES, 75015 Paris (FR)
(72) Inventeur: IGLESIAS CANO, Célia, 77550 MOISSY-CRAMAYEL (FR); MAGNAUDEIX, Dominique Michel Serge, 77550 MOISSY-CRAMAYEL (FR); LAUWICK, Lucas Antoine Christophe, 77550 MOISSY-CRAMAYEL (FR); BLAISE, Maxime Marie Désiré, 77550 MOISSY-CRAMAYEL (FR)
(74) Mandataire: Gevers & Orès
(86) Numéro de dépôt international: PCT/FR2022/051820
(87) Numéro de publication internationale: WO 2023/057703

(56) Documents cités:
- FR-A1- 3 059 268

## Description

### Domaine technique de l'invention

L'invention concerne le domaine technique des procédés de fabrication des aubes pour les turbomachines d'aéronef. L'invention concerne plus particulièrement, les procédés de fabrication des aubes en matériau composite, qui sont par exemple tournantes ou fixes.

### Arrière-plan technique

L'état de la technique est illustré par le document FR-A1-3059268.

De manière bien connue, une turbomachine d'aéronef comprend une soufflante permettant l'aspiration d'un flux d'air se divisant en un flux primaire et un flux secondaire. Le flux primaire traverse le moteur de la turbomachine tandis que le flux secondaire est dirigé vers une veine secondaire.

Le flux primaire est comprimé au sein, par exemple, d'un compresseur basse pression puis un compresseur haute pression du moteur. L'air comprimé est ensuite mélangé à un carburant et brulé au sein d'une chambre annulaire de combustion agencée en aval de la série de compresseurs. Les gaz formés par la combustion traversent une turbine haute pression et une turbine basse pression situées en aval de la chambre de combustion et qui permettent d'entrainer les rotors des compresseurs. Les gaz s'échappent enfin au travers d'une tuyère dont la section permet l'accélération de ces gaz pour générer de la propulsion.

Les composants de la turbomachine tels que la soufflante, les compresseurs ou les turbines comprennent des aubes qui permettent d'exercer une action sur le flux d'air. Par exemple, les aubes de compresseurs permettent de comprimer le flux d'air primaire.

Une aube comprend typiquement une pale qui présente une forme aérodynamique et comprend ainsi une face intrados et une face extrados reliée à la face intrados par un bord d'attaque et un bord de fuite. Pour réduire le poids de l'aube, la pale est formée d'un matériau composite comprenant des fibres de renfort noyées dans une matrice polymérique. Afin de protéger l'aube d'une dégradation provoquée par l'impact de corps étrangers, il est connu de revêtir le bord d'attaque d'un clinquant métallique. La fixation du clinquant métallique sur le bord d'attaque présente des défis.

En effet, un procédé de fabrication de l'aube consiste à fournir une préforme fibreuse puis de procéder à l'imprégnation de la préforme durant une étape d'injection d'une résine puis à la polymérisation de la résine. Puis, lors d'une étape ultérieure, le clinquant métallique est fixé sur le bord d'attaque de l'aube par collage. La polymérisation de la colle est réalisée dans une étuve. Le temps de fabrication de l'aube selon un tel procédé de fabrication est long car il est nécessaire que l'étape d'imprégnation soit achevée pour fixer le clinquant métallique sur le bord d'attaque.

Afin de réduire le temps de fabrication, le document FR-A1-3008920 enseigne de fixer le clinquant métallique sur le bord d'attaque durant l'étape d'imprégnation. Ce document enseigne que le moule peut être équipé d'un système de positionnement et de maintien du clinquant. Cependant, ce système ne donne pas entière satisfaction. En effet, le clinquant est fixé en position dans le moule mais la position relative du clinquant vis-à-vis de l'aube ne peut être déterminée avec précision. En effet, il est difficile de positionner l'aube vis-à-vis du clinquant une fois dans le moule. Aussi, le clinquant métallique peut être déplacé durant la fermeture du moule et/ou l'injection en l'absence d'un système de positionnement et maintien adapté. Ainsi, à l'issu du procédé de fabrication, un décalage radial et/ou axial du clinquant métallique par rapport au bord d'attaque peut être observé. Ces mauvais positionnements conduisent à des non conformités de l'aube.

Il existe ainsi un besoin de fournir un procédé de fabrication permettant de réduire les défauts de positionnement du clinquant métallique sur le bord d'attaque.

### Résumé de l'invention

A cet effet, l'invention propose un procédé de fabrication d'une aube comprenant une pale pour une turbomachine d'aéronef comprenant les étapes suivantes :
(100) fournir une préforme fibreuse de la pale, la préforme fibreuse comprenant un bord d'attaque, un bord de fuite, une face intrados reliée à une face extrados par le bord d'attaque et le bord de fuite,
(200) fournir un clinquant métallique de forme allongée et comprenant au moins un évidement d'indexage,
(300) fournir un moule d'injection comprenant au moins des parties supérieure et inférieure destinées à coopérer ensemble pour délimiter un volume interne et définissant chacune une empreinte de l'aube, et au moins une de ces parties supérieure et inférieure comprenant au moins un élément en saillie de positionnement,
(400) agencer la préforme fibreuse dans le moule d'injection,
(500) revêtir le bord d'attaque de la préforme fibreuse par le clinquant métallique, et insérer l'élément en saillie de positionnement dans l'évidement d'indexage de façon à maintenir en position le clinquant métallique sur le bord d'attaque,
(600) injecter une résine dans le moule d'injection afin de procéder à l'imprégnation de la préforme fibreuse et à la fixation du clinquant métallique sur le bord d'attaque .

Ainsi, selon l'invention, le clinquant métallique est placé sur le bord d'attaque de la préforme qui est agencée dans le moule d'injection afin de procéder simultanément à l'imprégnation de la préforme fibreuse et à la fixation du clinquant métallique sur le bord d'attaque. Ceci permet de réduire les temps de fabrication de l'aube.

En outre, selon l'invention, le clinquant métallique présente au moins un évidement d'indexage et le moule comprend au moins un élément en saillie de positionnement sur la partie supérieure et/ou inférieure. Lors de l'insertion de la préforme fibreuse dans le moule, l'élément en saillie de positionnement est inséré dans l'évidement d'indexage ce qui permet de fixer en position le clinquant métallique sur le bord d'attaque pendant l'opération d'injection du matériau. Ceci permet de réduire les risques de déplacement du clinquant métallique par rapport au bord d'attaque durant l'injection de la résine. Par conséquent, selon l'invention, les risques de fournir des aubes non-conformes sont réduits.

L'invention peut comprendre une ou plusieurs des caractéristiques suivantes, prises isolément les unes des autres ou en combinaison les unes avec les autres :
- l'élément en saillie de positionnement est un téton ménagé sur une surface intérieure de la partie supérieure ou de la partie inférieure ;
- le téton présente une forme cylindrique ou conique ;
- le téton présente une surface externe filetée ;
- le clinquant métallique comprend une première ailette latérale et une seconde ailette latérale reliée à la première ailette latérale par une portion centrale, l'évidement d'indexage étant ménagé sur la première ou la seconde ailette latérale ;
- à l'étape (200), le clinquant métallique comprend une partie centrale et une partie excédentaire agencée de part et d'autre de la partie centrale, l'évidement d'indexage étant situé sur une ou chacune des parties excédentaires ;
- l'évidement d'indexage est un orifice ou une encoche ;
- le clinquant métallique comprend deux évidements d'indexage comprenant respectivement un premier orifice et un second orifice opposé au premier orifice et en ce que la partie supérieure ou inférieure comprend un premier élément en saillie de positionnement destiné à coopérer avec le premier orifice et un second élément en saillie de positionnement destiné à coopérer avec le second orifice ;
- la préforme fibreuse comprend un évidement d'indexage additionnel ;
- le procédé comprend l'étape suivante après l'étape (600) : (700) usiner l'aube de façon à retirer l'évidement d'indexage.

La divulgation concerne également un moule d'injection pour la mise en œuvre du procédé de fabrication selon l'une quelconque des caractéristiques précédentes, comprenant :
- au moins des parties inférieure et supérieure présentant chacune une empreinte de l'aube et destinées à coopérer ensemble pour définir un volume interne de réception de la préforme fibreuse et du clinquant métallique,
- au moins une de ces parties supérieure et inférieure comprenant au moins un élément en saillie de positionnement destiné à coopérer avec l'évidement d'indexage du clinquant métallique de façon à maintenir en position le clinquant métallique sur le bord d'attaque.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une représentation schématique en coupe longitudinale d'une demi-turbomachine d'aéronef ;
[Fig.2] la figure 2 est une représentation schématique en perspective d'une aube selon un premier mode de réalisation,
[Fig.3] la figure 3 est une représentation schématique en perspective d'une aube selon un second mode de réalisation,
[Fig.4] la figure 4 est une vue en coupe transversale de l'aube de la figure 2 ou 3,
[Fig.5] la figure 5 est une vue schématique d'une préforme fibreuse et d'un clinquant métallique,
[Fig.6] la figure 6 est une vue schématique d'une préforme fibreuse et d'un clinquant métallique selon une variante de réalisation de la figure 5, [Fig.7a] la figure 7a est une vue en coupe transversale d'un moule dans une position ouverte dans lequel sont agencés la préforme fibreuse et le clinquant métallique,
[Fig.7b] la figure 7b est une vue en coupe transversale du moule dans une position fermée et dans lequel sont agencés la préforme fibreuse et le clinquant métallique,
[Fig.7c] la figure 7c est une vue en coupe transversale du moule dans une position fermée et dans lequel sont agencés la préforme fibreuse et le clinquant métallique, selon une variante de réalisation de la figure 7b,
[Fig.7d] la figure 7d est une vue en coupe transversale du moule dans une position ouverte et dans lequel sont agencés la préforme fibreuse et le clinquant métallique, selon une variante de réalisation de la figure 7a, [Fig.8] la figure 8 est une représentation schématique en perspective du moule d'injection selon l'invention,
[Fig.9] la figure 9 est un schéma synoptique du procédé de fabrication selon l'invention.

### Description détaillée de l'invention

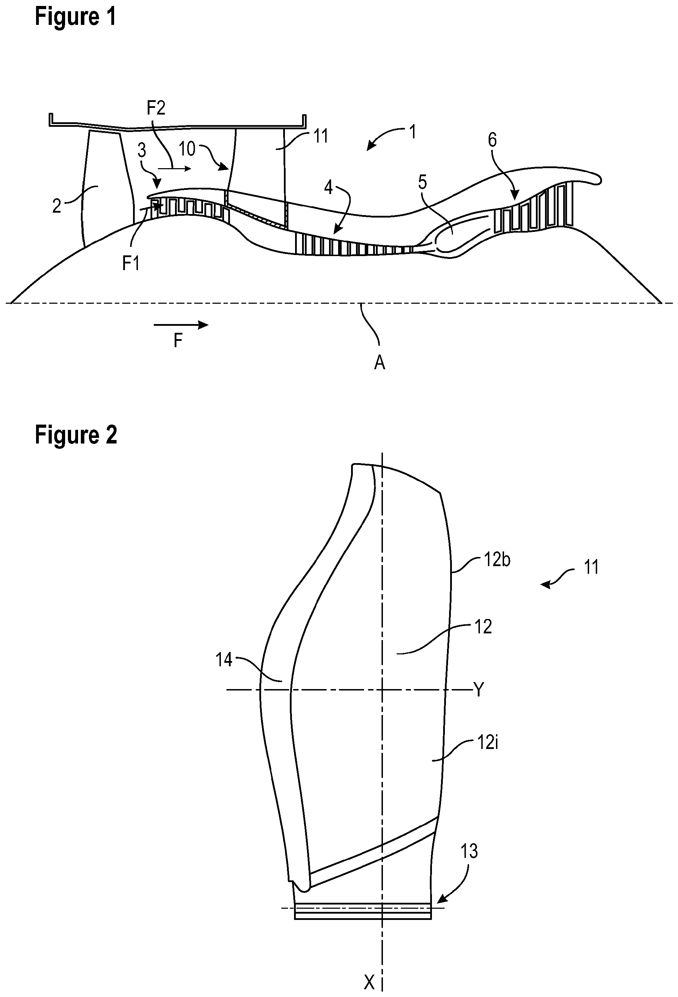

Une turbomachine 1 d'aéronef est par exemple représentée sur la figure 1. La turbomachine 1 s'étend selon un axe longitudinal A. Elle comprend d'amont en aval dans le sens d'écoulement des gaz F le long de l'axe longitudinal A, une soufflante 2, au moins un compresseur tel qu'un compresseur basse pression 3 et un compresseur haute pression 4, une chambre de combustion 5, au moins une turbine 6 telle qu'une turbine haute pression et une turbine basse pression, et une tuyère (non représentée). Le rotor de la turbine basse pression est relié à la soufflante 2 et au rotor du compresseur basse pression 3 par un arbre basse pression (non représenté). Le rotor de la turbine haute pression est quant à lui relié au rotor du compresseur haute pression 4 par un arbre haute pression (non représenté).

La turbomachine 1 comprend par ailleurs un redresseur 10. Le redresseur permet de redresser le flux à la sortie d'un rotor situé en amont afin de fournir une poussée maximale à la sortie de la turbomachine 1. Sur l'exemple particulier de la figure 1, le redresseur 10 est situé en aval de la soufflante 2 et permet de redresser le flux secondaire F2. Le redresseur 10 est par exemple agencé entre le compresseur basse pression 3 et le compresseur haute pression 4.

La soufflante 2 permet l'aspiration d'un flux d'air se divisant en un flux primaire F1 et un flux secondaire F2. Le flux primaire F1 traverse le moteur de la turbomachine 1 tandis que le flux secondaire F2 est dirigé vers une veine secondaire entourant la veine primaire.

Le flux primaire F1 est comprimé au sein du compresseur basse pression 3 puis du compresseur haute pression 4. L'air comprimé est ensuite mélangé à un carburant et brulé au sein de la chambre de combustion 5. Les gaz formés par la combustion traversent la turbine haute pression et la turbine basse pression. Les gaz s'échappent enfin au travers de la tuyère dont la section permet l'accélération de ces gaz pour générer de la propulsion. Le flux secondaire F2 traverse le redresseur 10 qui accélère la vitesse de circulation du flux secondaire F2 pour générer de la propulsion.

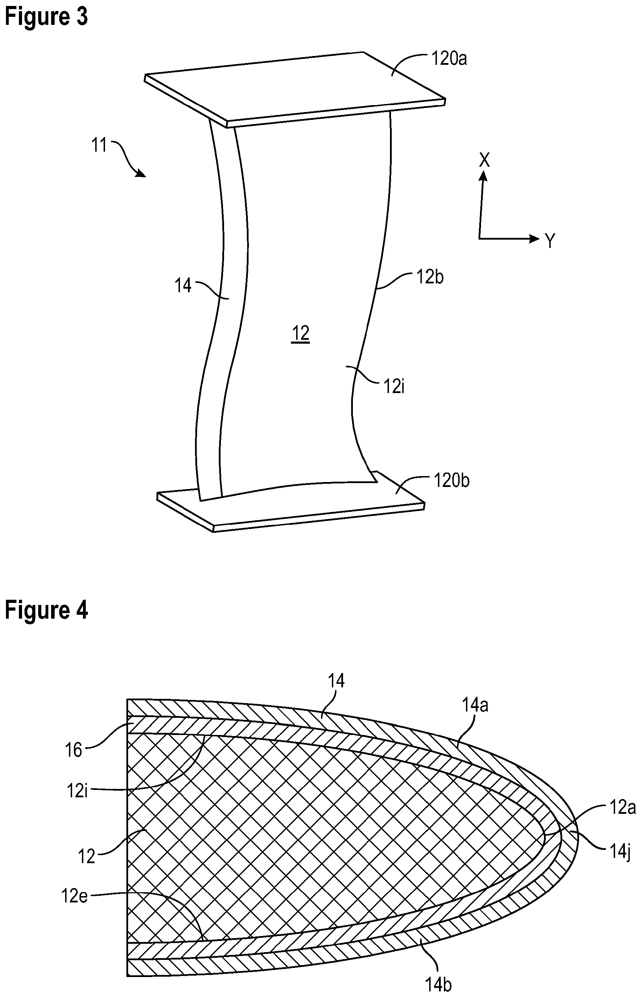

La soufflante 2, le compresseur, la turbine et le redresseur 10 sont équipés d'un ensemble d'aubes 11. Les aubes 11 sont mobiles ou fixes en rotation autour de l'axe longitudinal A. Les aubes 11 s'étendent radialement par rapport à l'axe longitudinal A. En référence aux figures 2 et 3, chaque aube 11 comprend une pale 12 et un clinquant métallique 14 fixée sur la pale 12. La pale 12 s'étend selon un axe d'allongement X. L'axe d'allongement X de la pale 12 s'étend radialement par rapport à l'axe longitudinal A de la turbomachine 1 après montage de l'aube 11 sur la turbomachine 1. La pale 12 présente un profil aérodynamique. La pale 12 comprend ainsi une face extrados 12e et une face intrados 12i reliées par un bord d'attaque 12a et un bord de fuite 12b. La pale 12 s'étend ainsi selon un axe transversal Y entre le bord d'attaque 12a et le bord de fuite 12b. L'axe transversal Y est perpendiculaire à l'axe d'allongement X. La pale 12 s'étend par ailleurs longitudinalement selon l'axe d'allongement X entre une première extrémité et une seconde extrémité opposée à la première extrémité.

La pale 12 est en matériau composite. Le matériau composite comprend une matrice polymérique et un renfort fibreux noyé dans la matrice. Le matériau composite est par exemple un composite à matrice organique (CMO). La matrice est par exemple une matrice polymérique thermoplastique ou thermodurcissable. Le matériau thermodurcissable est par exemple un polymère époxyde. Le renfort fibreux comprend des fibres qui sont par exemple des fibres de carbone ou des fibres de verre. Les fibres sont organisées sous la forme d'une préforme fibreuse.

Le clinquant métallique 14 s'étend sur le bord d'attaque 12a et avantageusement tout le long du bord d'attaque 12a. Le matériau métallique du clinquant métallique 14 est par exemple du titane ou un alliage tel qu'un acier, par exemple un acier inoxydable ou un alliage de nickel et de cobalt (NiCo). Le clinquant métallique 14 présente une forme allongée en forme de dièdre. Il est destiné à protéger le bord d'attaque 12a des chocs extérieurs. Comme mieux visible sur la figure 4, le clinquant métallique 14 présente une section transversale en forme de V ou de U. Le clinquant métallique 14 comprend une première ailette latérale 14a et une seconde ailette latérale 14b reliée à la première ailette latérale 14a par une portion centrale 14j. Les première et seconde ailettes latérales 14a, 14b définissent entre elles une cavité dans laquelle le bord d'attaque 12a est agencé. La première ailette latérale 14a présente une première extrémité longitudinale libre et la seconde ailette latérale 14b présente une seconde extrémité longitudinale libre qui sont opposées à la portion centrale 14j. Les extrémités longitudinales s'étendent respectivement sur la face intrados 12i et la face extrados 12e de la pale 12. Chaque ailette latérale 14a, 14b présente un premier bord et un second bord opposé au premier bord selon l'axe d'allongement X. Les bords s'étendent transversalement par rapport aux extrémités longitudinales. Avantageusement, l'épaisseur du clinquant métallique 14 est variable. Par exemple, l'épaisseur de la portion centrale 14j est supérieure aux épaisseurs des première et seconde ailettes latérales 14a, 14b. Avantageusement, l'épaisseur des première et seconde ailettes latérales 14a, 14b est décroissante en direction du bord de fuite 12b de la pale 12. Les première et seconde ailettes latérales 14a, 14b sont effilées en direction du bord de fuite 12b de la pale 12.

Le clinquant métallique 14 est fixé au bord d'attaque 12a par collage. L'aube 11 comprend au moins une couche de colle 16 agencée entre la pale 12 et le clinquant métallique 14. Une couche d'adhésif (non représentée) supplémentaire peut également être agencée entre le bouclier de protection 14 et la pale 12 afin d'améliorer la fixation du bouclier de protection 14.

Selon un premier mode de réalisation représenté sur la figure 2, les aubes 11 sont mobiles en rotation. Elles équipent par exemple la soufflante 2, le compresseur basse pression 3 et/ou le compresseur haute pression 4 et/ou la turbine haute pression et/ou la turbine basse pression. Selon ce premier mode de réalisation, l'aube 11 comprend en outre un pied 13. Le pied 13 est notamment relié à la seconde extrémité de l'aube 11. Il est destiné à être fixé à un disque (non représenté) par exemple mobile en rotation autour de l'axe longitudinal A de la turbomachine 1.

Selon un second mode de réalisation représenté sur la figure 3, les aubes 11 équipent le redresseur 10. De telles aubes 11 équipant le redresseur 10 sont connues sous le terme anglais « Outlet Guide Vane » (OGV). Selon ce second mode de réalisation, l'aube 11 comprend en outre une première plateforme 120a et une seconde plateforme 120b opposée. La première plateforme 120a est solidaire de la première extrémité de l'aube 11 et la seconde plateforme 120b est solidaire de la seconde extrémité de l'aube 11.

L'aube 11 est fabriquée par un procédé d'injection par transfert de résine, connu sous l'acronyme RTM pour « Resin Transfert Moding » en langue anglaise.

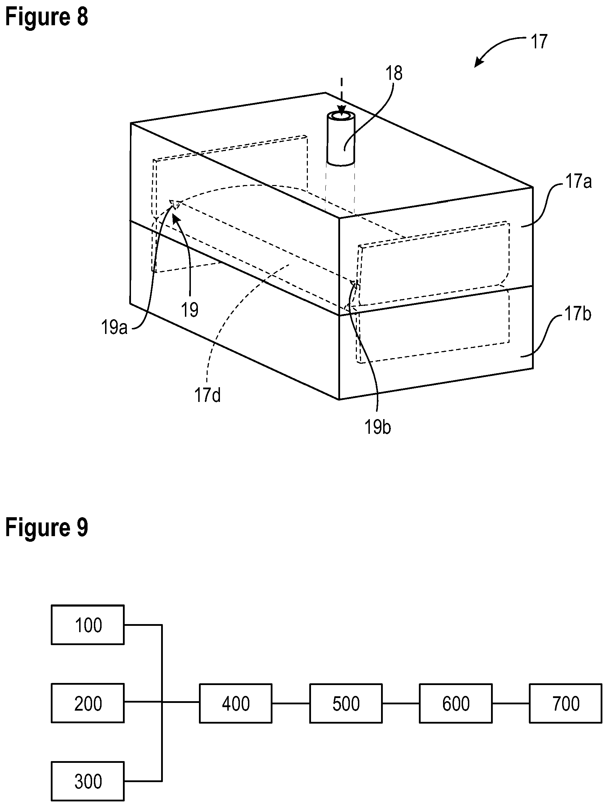

Un procédé de fabrication de l'aube 11 selon l'invention va maintenant être décrit en référence à la figure 9

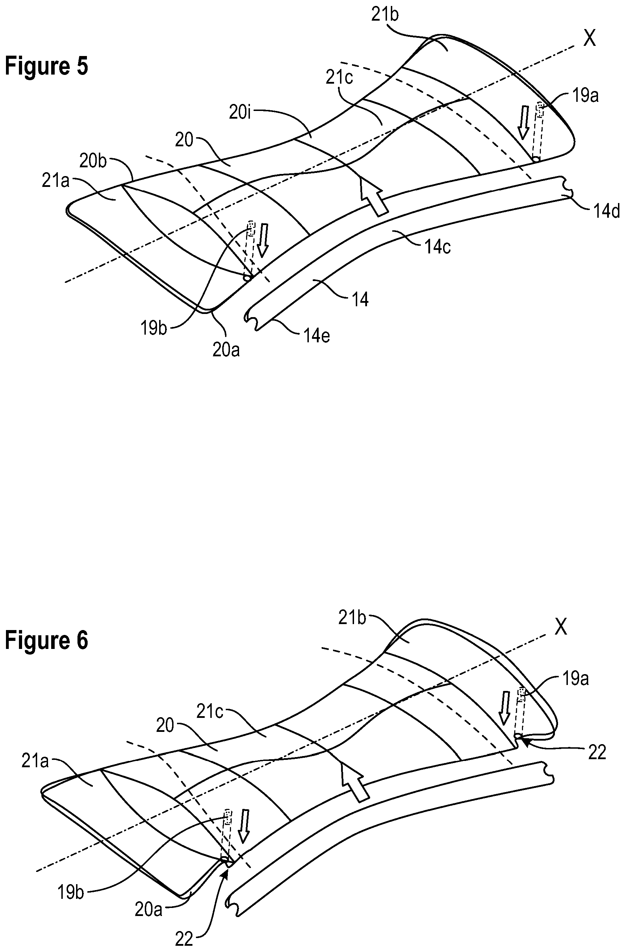

Dans une première étape 100, on fournit une préforme fibreuse 20 illustrée par exemple sur la figure 5. La préforme fibreuse 20 constitue le renfort fibreux du matériau composite de la pale 12. La préforme fibreuse 20 comprend un tissage tridimensionnel des fibres de renfort. Les fibres sont, comme décrit ci-dessus, des fibres de carbone ou des fibres de verre. La préforme fibreuse 20 présente le même profil que la pale 12. La préforme fibreuse 20 s'étend ainsi selon l'axe d'allongement X et présente un profil aérodynamique. Elle présente un bord d'attaque 20a, un bord de fuite 20b, une face intrados 20i reliée à une face extrados par le bord d'attaque 20a et le bord de fuite 20b.

Selon un mode de réalisation avantageux de l'invention, la préforme fibreuse 20 comprend le long de l'axe X, une partie centrale 21c et une première partie excédentaire 21a et une seconde partie excédentaire 21b agencées de part et d'autre de la partie centrale 21c. Les parties excédentaires 21a et 21b sont par exemple destinées à être au moins partiellement retirées lors d'une étape d'usinage ultérieure. Les parties excédentaires 21a et 21b sont situées en dehors de la partie dynamique de la préforme fibreuse 20 c'est-à-dire en dehors de la partie de la pale 12 destinée à entrer en contact avec le flux primaire ou secondaire F1, F2.

Avantageusement, et comme illustré sur la figure 6, la préforme fibreuse 20 comprend au moins un évidement d'indexage additionnel 22. L'évidement d'indexage additionnel 22 est par exemple réalisé par découpage au jet d'eau. L'évidement d'indexage additionnel 22 est par exemple ménagé sur la première partie et/ou la seconde partie excédentaire 21a, 21b. L'évidement d'indexage additionnel 22 est par exemple une encoche. Selon un exemple non représenté, l'évidement d'indexage additionnel 22 est un orifice. L'orifice présente un axe qui s'étend perpendiculairement à l'axe d'allongement X de la préforme fibreuse 20. L'orifice est préférentiellement traversant. L'évidement d'indexage additionnel 22 est réalisé sur le bord d'attaque 20a de la préforme fibreuse 20. La préforme fibreuse 20 comprend par exemple un évidement d'indexage additionnel 22 réalisé sur la première partie excédentaire 21a et un évidement d'indexage additionnel 22 réalisé sur la seconde partie excédentaire 21b.

En outre, le procédé comprend une étape 200 de fourniture du clinquant métallique 14. L'étape 200 peut être réalisée avant, après ou simultanément à l'étape 100.

Dans l'étape 200, le clinquant métallique 14 comprend, notamment le long de l'axe d'allongement X, une partie centrale 14c et une première partie excédentaire 14d et une deuxième partie excédentaire 14e agencées de part et d'autre de la partie centrale 14c. Les parties excédentaires 14d, 14e sont destinées à recouvrir les parties excédentaires 21b, 21a du bord d'attaque 20a de la préforme fibreuse 20.

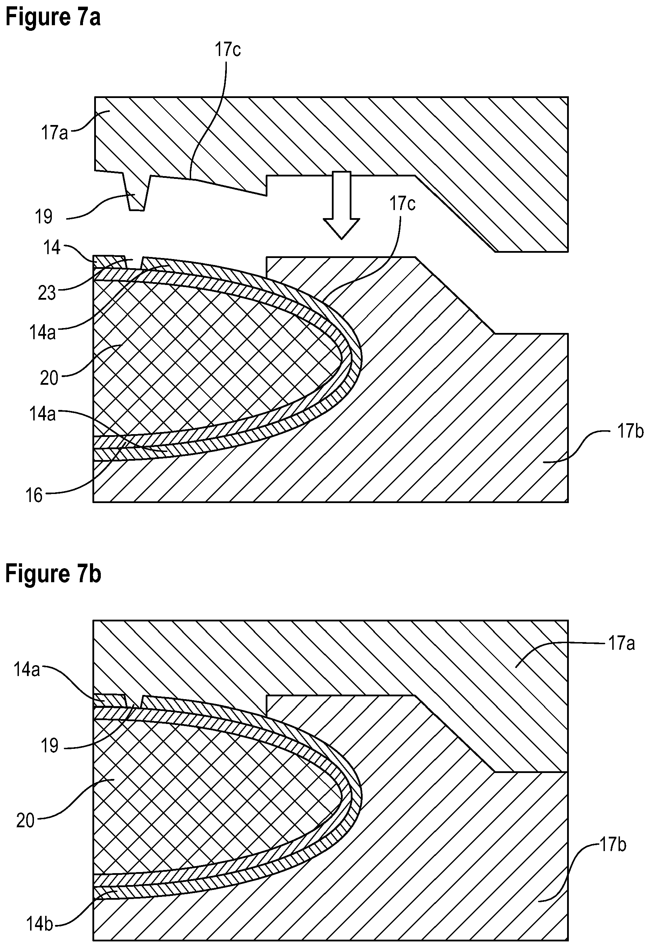

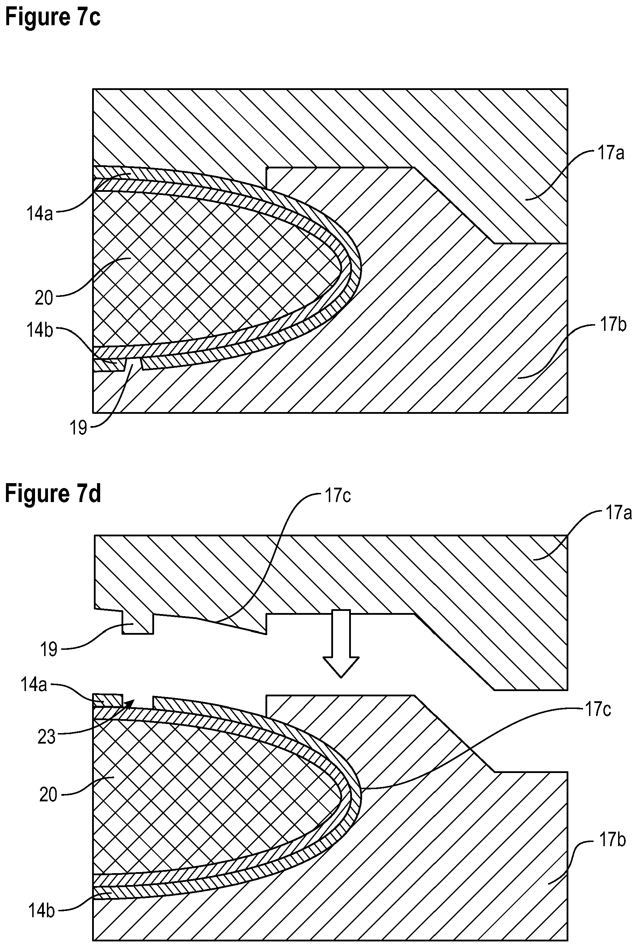

Selon l'invention, dans l'étape 200, le clinquant métallique 14 comprend au moins un évidement d'indexage 23 représenté par exemple sur la figure 7a. L'évidement d'indexage 23 débouche sur la surface opposée à la préforme fibreuse 20. L'évidement d'indexage 23 est par exemple une encoche ou un orifice. L'axe de l'orifice est perpendiculaire à l'axe longitudinal X de la préforme fibreuse 20. L'évidement d'indexage 23 est situé sur au moins une partie excédentaire 14d, 14e ou sur chaque partie excédentaire 14d, 14e. Ainsi, le clinquant métallique 14 peut comprendre un premier évidement d'indexage 23 tel qu'un orifice et un second évidement d'indexage 23 tel qu'un orifice opposé au premier évidemment d'indexage 23. L'évidement d'indexage 23 peut être situé sur la première ailette latérale 14a et/ou la secondaire ailette latérale 14b comme représenté sur la figure 7c. L'évidement d'indexage 23 est par exemple ménagé dans toute l'épaisseur de la première ailette latérale 14a et/ou la seconde ailette latérale 14b. La couche de colle 16 est par ailleurs disposée dans le clinquant métallique 14 de façon à ce que la couche de colle 16 soit disposée entre le clinquant métallique 14 et la préforme fibreuse 20 après disposition du clinquant métallique 14 sur le bord d'attaque 20a. Cette couche de colle 16 peut également être formée lors d'une étape ultérieure 600 d'injection.

Le procédé comprend en outre une étape 300 de fourniture d'un moule d'injection 17. L'étape 300 peut être réalisée avant, après ou simultanément aux étapes ci-dessus. Le moule d'injection 17 est représenté par exemple sur la figure 8.

Le moule d'injection 17 comprend au moins une partie supérieure 17a et une partie inférieure 17b. La partie supérieure 17a est par exemple mobile et la partie inférieure 17b est par exemple fixe. Le moule d'injection 17 peut ainsi être ouvert ou fermé par rotation ou par translation par exemple de la partie supérieure 17a.

La partie supérieure 17a et la partie inférieure 17b comprennent chacune une face interne présentant une empreinte 17c de l'aube 11 à réaliser. Par « face interne » il est entendu la face qui est à l'intérieur du moule d'injection 17 lorsque ce dernier est fermé et qui fait face à la face interne de l'autre partie. Lorsque le moule 17 est fermé, l'empreinte 17c de chacune des parties supérieure et inférieure 17a, 17b définissent un volume interne 17d ayant la forme de l'aube 11 à réaliser et dans lequel est placé la préforme fibreuse 20 et le clinquant métallique 14

Le moule d'injection 17 comprend un port d'injection 18 d'une résine. Le port d'injection 18 est par exemple situé sur la partie supérieure 17a.

Comme mieux visible sur les figures 7a à 7d, selon l'invention, le moule d'injection 17 comprend en outre au moins un élément en saillie de positionnement 19. L'élément en saillie de positionnement 19 permet de positionner et de maintenir en position le clinquant métallique 14 sur le bord d'attaque 20a dans le moule d'injection 17 durant l'injection de la résine. L'élément en saillie de positionnement 19 présente une forme complémentaire à l'évidement d'indexage 23. L'élément en saillie de positionnement 19 est par exemple un téton présentant une forme cylindrique comme représenté sur la figure 7d ou conique comme représenté sur les figures 7a à 7c. Avantageusement, le téton présente une surface externe filetée. Ceci permet de faciliter la coopération du téton avec le clinquant métallique 14. Avantageusement, l'élément en saillie de positionnement 19 est démontable. Par « démontable » il est entendu que l'élément en saillie de positionnement 19 peut être ajouté ou retiré du moule d'injection 17 sans dégrader le moule d'injection 17. En effet, l'élément en saillie de positionnement 19 s'use durant les cycles d'injection et un remplacement de l'élément en saillie de positionnement 19 est nécessaire. Le caractère démontable de l'élément en saillie de positionnement 19 facilite donc l'entretien du moule d'injection 17. Selon une alternative, l'élément en saillie de positionnement 19 est monté de manière permanente dans le moule d'injection 17. Il est par exemple usiné ou soudé au moule d'injection 17.

Selon un exemple de réalisation représenté sur les figures 7a et 7b, l'élément en saillie de positionnement 19 est situé sur la partie supérieure 17a du moule d'injection 17. Selon un autre exemple de réalisation représenté sur la figure 7c, l'élément en saillie de positionnement 19 est situé sur la partie inférieure 17b du moule d'injection 17.

Avantageusement, le moule d'injection 17 comprend un premier élément en saillie de positionnement 19a et un second élément en saillie de positionnement 19b. Les éléments en saillie de positionnement 19a, 19b sont par exemple situé aux extrémités des parties inférieure 17b et/ou supérieure 17a .

L'élément en saillie de positionnement 19b est situé sur la surface intérieure des parties inférieure et/ supérieure 17b, 17a. La surface intérieure est la surface faisant face à la préforme fibreuse 20 après insertion dans le moule d'injection 17.

Puis dans une étape ultérieure aux étapes ci-dessus, le procédé comprend une étape 400 d'agencement de la préforme fibreuse 20 dans le moule d'injection 17 en vue de l'imprégnation de la préforme fibreuse 20.

Le procédé selon l'invention comprend en outre une étape ultérieure 500 durant laquelle le bord d'attaque 20a de la préforme fibreuse 20 est revêtu du clinquant métallique 14. L'évidement d'indexage 23 et l'évidement d'indexage additionnel 22 sont alignés durant cette étape ce qui permet de positionner avec précision le clinquant métallique 14.

Durant cet étape, l'élément en saillie de positionnement 19 est inséré dans l'évidement d'indexage 23 et dans l'évidement d'indexage additionnel 22. Ceci peut avoir lieu lors de la fermeture du moule d'injection 17 comme représenté sur la figure 7b, lorsque l'élément en saillie de positionnement 19 est agencé sur la partie supérieure 17a qui est la partie mobile du moule d'injection 17 ou dès l'insertion de la préforme fibreuse 20 comme représenté sur la figure 7c, lorsque l'élément en saillie de positionnement 19 est agencé sur la partie inférieure 17b qui est la partie fixe du moule d'injection 17. Ainsi, la coopération de l'élément en saillie de positionnement 19 et de l'évidement d'indexage 23 permet positionner avec précision la préforme fibreuse 20 et le clinquant métallique 14 dans le moule d'injection 17.

Puis, une étape 600 d'injection de la résine dans le moule est réalisée via le port d'injection 18. Cette étape permet l'imprégnation de la préforme fibreuse 20 et la fixation du clinquant métallique 14 sur le bord d'attaque 12a. Durant l'étape d'injection, le clinquant métallique 14 est maintenu en position sur le bord d'attaque 12 grâce à la coopération de l'élément en saillie de positionnement 19 et de l'évidement d'indexage 23. La résine est le matériau formant la matrice de la pale 12. La température du moule d'injection 17 durant l'étape d'injection est comprise entre 50°C et 200°C, avantageusement entre 50°C et 180°C.

Eventuellement, selon le matériau de la résine, une sous étape de cuisson 610 peut être réalisée pour la polymérisation de la couche de colle 16 et de la résine. L'étape de cuisson est réalisée à une température comprise entre 120°C et 250°C.

Avantageusement, après l'étape 600, le procédé comprend une étape 700 d'usinage de l'aube 11 de façon à retirer l'évidement d'indexage 23 et l'évidement d'indexage additionnel 22 lorsqu'il est présent. Selon cette étape, l'aube 11 est usinée de façon retirer au moins partiellement les parties excédentaires 21a, 21b, 14d, 14e. Les évidements d'indexage 23, 22 sont ainsi réalisés sur les chutes de l'aube 11 et n'impactent pas les propriétés de l'aube 11.

En outre, l'évidement d'indexage 22 de la préforme fibreuse 20 facilite l'appairage de l'élément en saillie de positionnement 19. Ceci permet en outre de réduire les déformations locales du tissage de la préforme fibreuse 20 lors de l'insertion de l'élément en saillie de positionnement 19 dans l'évidement d'indexage 23 du clinquant métallique 14. Aussi, la précision du positionnement de la préforme fibreuse 20 par rapport au bord d'attaque 12a est améliorée.

## Revendications

1. Procédé de fabrication d'une aube (11) comprenant une pale (12) pour une turbomachine (1) d'aéronef comprenant les étapes suivantes :
(100) fournir une préforme fibreuse (20) de la pale (12), la préforme fibreuse (20) comprenant un bord d'attaque (20a), un bord de fuite (20b), une face intrados (20i) reliée à une face extrados par le bord d'attaque (20a) et le bord de fuite (20b),
(200) fournir un clinquant métallique (14) de forme allongée et comprenant au moins un évidement d'indexage (23),
(300) fournir un moule d'injection (17) comprenant au moins des parties supérieure et inférieure (17a, 17b) destinées à coopérer ensemble pour délimiter un volume interne (17d) et définissant chacune une empreinte (17c) de l'aube (11), et au moins une de ces parties supérieure et inférieure (17a, 17b) comprenant au moins un élément en saillie de positionnement (19),
(400) agencer la préforme fibreuse (20) dans le moule d'injection (17),
(500) revêtir le bord d'attaque (20a) de la préforme fibreuse (20) par le clinquant métallique (14), et insérer l'élément en saillie de positionnement (19) dans l'évidement d'indexage (23) de façon à maintenir en position le clinquant métallique (14) sur le bord d'attaque (20a),
(600) injecter une résine dans le moule d'injection (17) afin de procéder à l'imprégnation de la préforme fibreuse (20) et à la fixation du clinquant métallique (14) sur le bord d'attaque (20a).

2. Procédé de fabrication selon la revendication précédente, **caractérisé en ce que** l'élément en saillie de positionnement (19) est un téton ménagé sur une surface intérieure de la partie supérieure (17a) ou de la partie inférieure (17b).

3. Procédé de fabrication selon la revendication précédente, **caractérisé en ce que** le téton présente une forme cylindrique ou conique.

4. Procédé de fabrication selon la revendication 2 et/ou 3, **caractérisé en ce que** le téton présente une surface externe filetée.

5. Procédé de fabrication selon l'une quelconque des revendications précédentes, **caractérisé en ce que** le clinquant métallique (14) comprend une première ailette latérale (14a) et une seconde ailette latérale (14b) reliée à la première ailette latérale (14a) par une portion centrale (14j), l'évidement d'indexage (23) étant ménagé sur la première ou la seconde ailette latérale (14a, 14b).

6. Procédé de fabrication selon l'une quelconque des revendications précédentes, **caractérisé en ce qu'**à l'étape (200) le clinquant métallique (14) comprend une partie centrale (14c) et une partie excédentaire (14d, 14e) agencée de part et d'autre de la partie centrale (14c), l'évidement d'indexage (23) étant situé sur une ou chacune des parties excédentaires (14d, 14e).

7. Procédé de fabrication selon l'une quelconque des revendications précédentes, **caractérisé en ce que** l'évidement d'indexage (23) est un orifice ou une encoche.

8. Procédé de fabrication selon l'une quelconque des revendications précédentes, **caractérisé en ce que** le clinquant métallique (14) comprend deux évidements d'indexage (23) comprenant respectivement un premier orifice et un second orifice opposé au premier orifice et **en ce que** la partie supérieure ou inférieure (17a, 17b) comprend un premier élément en saillie de positionnement (19a) destiné à coopérer avec le premier orifice et un second élément en saillie de positionnement (19b) destiné à coopérer avec le second orifice.

9. Procédé de fabrication selon l'une quelconque des revendications précédentes, **caractérisé en ce que** la préforme fibreuse (20) comprend un évidement d'indexage additionnel (22).

10. Procédé de fabrication selon l'une quelconque des revendications précédentes, **caractérisé en ce qu'**il comprend en outre l'étape suivante après l'étape (600) :
(700) usiner l'aube (11) de façon à retirer l'évidement d'indexage (23).

## Patentansprüche

1. Verfahren zur Herstellung einer Schaufel (11), die ein Blatt (12) für ein Turbotriebwerk (1) eines Luftfahrzeugs umfasst, umfassend die folgenden Schritte:
(100) Bereitstellen einer faserigen Vorform (20) des Blatts (12), wobei die faserige Vorform (20) eine Anströmkante (20a), eine Abströmkante (20b), eine Innenfläche (20i), die mit einer Außenfläche durch die Anströmkante (20a) und die Abströmkante (20b) verbunden ist, umfasst,
(200) Bereitstellen einer Metallfolie (14) von länglicher Form und mindestens eine Indexierungsausnehmung (23) umfassend,
(300) Bereitstellen einer Spritzgussform (17), umfassend mindestens obere und untere Teile (17a, 17b), die dazu bestimmt sind, zusammen zu kooperieren, um ein internes Volumen (17d) abzugrenzen und die jeweils eine Einprägung (17c) der Schaufel (11) definieren, und wobei mindestens eines dieser oberen und unteren Teile (17a, 17b) mindestens ein hervorstehendes Positionierungselement (19) umfasst,
(400) Anordnen der faserigen Vorform (20) in der Spritzgussform (17),
(500) Überziehen der Anströmkante (20a) der faserigen Vorform (20) mit der Metallfolie (14) und Einsetzen des hervorstehenden Positionierungselements (19) in die Indexierungsausnehmung (23) auf eine Weise, um die Metallfolie (14) auf der Anströmkante (20a) in Position zu halten,
(600) Einspritzen eines Harzes in die Spritzgussform (17), um mit der Imprägnierung der faserigen Vorform (20) und der Befestigung der Metallfolie (14) auf der Anströmkante (20a) fortzufahren.

2. Verfahren zur Herstellung nach dem vorstehenden Anspruch, **dadurch gekennzeichnet, dass** das hervorstehende Positionierungselement (19) ein auf einer Innenoberfläche des oberen Teils (17a) oder des unteren Teils (17b) ausgebildeter Zapfen ist.

3. Verfahren zur Herstellung nach dem vorstehenden Anspruch, **dadurch gekennzeichnet, dass** der Zapfen eine zylindrische oder konische Form aufweist.

4. Verfahren zur Herstellung nach Anspruch 2 und/oder 3, **dadurch gekennzeichnet, dass** der Zapfen eine externe Oberfläche mit Gewinde aufweist.

5. Verfahren zur Herstellung nach einem der vorstehenden Ansprüche, **dadurch gekennzeichnet, dass** die Metallfolie (14) eine erste seitliche Rippe (14a) und eine zweite seitliche Rippe (14b) umfasst, die mit der ersten seitlichen Rippe (14a) durch einen mittleren Abschnitt (14j) verbunden ist, wobei die Indexierungsausnehmung (23) auf der ersten oder der zweiten seitlichen Rippe (14a, 14b) ausgebildet ist.

6. Verfahren zur Herstellung nach einem der vorstehenden Ansprüche, **dadurch gekennzeichnet, dass** bei Schritt (200) die Metallfolie (14) einen mittleren Teil (14c) und einen überschüssigen Teil (14d, 14e) umfasst, der beiderseits des mittleren Teils (14c) angeordnet ist, wobei die Indexierungsausnehmung (23) sich auf einem oder jedem der überschüssigen Teile (14d, 14e) befindet.

7. Verfahren zur Herstellung nach einem der vorstehenden Ansprüche, **dadurch gekennzeichnet, dass** die Indexierungsausnehmung (23) eine Öffnung oder eine Einkerbung ist.

8. Verfahren zur Herstellung nach einem der vorstehenden Ansprüche, **dadurch gekennzeichnet, dass** die Metallfolie (14) zwei Indexierungsausnehmungen (23) umfasst, die jeweils eine erste Öffnung und eine der ersten Öffnung gegenüberliegende zweite Öffnung umfassen, und dadurch, dass der obere oder untere Teil (17a, 17b) ein erstes hervorstehendes Positionierungselement (19a), das dazu bestimmt ist, mit der ersten Öffnung zu kooperieren, und ein zweites hervorstehendes Positionierungselement (19b) umfassen, das dazu bestimmt ist, mit der zweiten Öffnung zu kooperieren.

9. Verfahren zur Herstellung nach einem der vorstehenden Ansprüche, **dadurch gekennzeichnet, dass** die faserige Vorform (20) eine zusätzliche Indexierungsausnehmung (22) umfasst.

10. Verfahren nach einem der vorstehenden Ansprüche, **dadurch gekennzeichnet, dass** es nach dem Schritt (600) weiter den folgenden Schritt umfasst:
(700) Bearbeiten der Schaufel (11) auf eine Weise, um die Indexierungsausnehmung (23) zu entfernen.

## Claims

1. A method for manufacturing a vane (11) comprising a blade (12) for an aircraft turbine engine (1) comprising the following steps:
(100) providing a fibrous preform (20) of the blade (12), the fibrous preform (20) comprising a leading edge (20a), a trailing edge (20b), a pressure side face (20i) connected to a suction side face by the leading edge (20a) and the trailing edge (20b),
(200) providing an elongate metal foil (14) comprising at least one indexing recess (23),
(300) providing an injection mould (17) comprising at least upper and lower parts (17a, 17b) intended to cooperate together to delimit an internal volume (17d) and each defining a pattern (17c) of the vane (11), and at least one of these upper and lower parts (17a, 17b) comprising at least one projecting positioning element (19),
(400) arranging the fibrous preform (20) in the injection mould (17),
(500) coating the leading edge (20a) of the fibrous preform (20) with the metal foil (14), and inserting the projecting positioning element (19) into the indexing recess (23) so as to hold the metal foil (14) in position on the leading edge (20a),
(600) injecting a resin into the injection mould (17) in order to impregnate the fibrous preform (20) and to attach the metal foil (14) to the leading edge (20a).

2. The manufacturing method according to the preceding claim, **characterised in that** the projecting positioning element (19) is a nipple provided on an inner surface of the upper part (17a) or of the lower part (17b).

3. The manufacturing method according to the preceding claim, **characterised in that** the nipple has a cylindrical or conical shape.

4. The manufacturing method according to claim 2 and/or 3, **characterised in that** the nipple has a threaded external surface.

5. The manufacturing method according to any one of the preceding claims, **characterised in that** the metal foil (14) comprises a first lateral fin (14a) and a second lateral fin (14b) connected to the first lateral fin (14a) by a central portion (14j), the indexing recess (23) being provided on the first or the second lateral fin (14a, 14b).

6. The manufacturing method according to any one of the preceding claims, **characterised in that** in step (200) the metal foil (14) comprises a central part (14c) and an excess part (14d, 14e) arranged on either side of the central part (14c), the indexing recess (23) being located on one or each of the excess parts (14d, 14e).

7. The manufacturing method according to any of the preceding claims, **characterised in that** the indexing recess (23) is an orifice or a notch.

8. The manufacturing method according to any one of the preceding claims, **characterised in that** the metal foil (14) comprises two indexing recesses (23) respectively comprising a first orifice and a second orifice opposite the first orifice and **in that** the upper or lower part (17a, 17b) comprises a first projecting positioning element (19a) intended to cooperate with the first orifice and a second projecting positioning element (19b) intended to cooperate with the second orifice.

9. The manufacturing method according to any one of the preceding claims, **characterised in that** the fibrous preform (20) comprises an additional indexing recess (22).

10. The manufacturing method according to any one of the preceding claims, **characterised in that** it further comprises the following step after step (600):
(700) machining the vane (11) so as to remove the indexing recess (23).
